# EUROPÄISCHE PATENTSCHRIFT

(11) **EP 1 067 833 B1**
(45) Veröffentlichungstag und Bekanntmachung des Hinweises auf die Patenterteilung: **11.12.2002**
(21) Anmeldenummer: 99917903.9
(22) Anmeldetag: 29.03.1999
(51) Int. Cl.: A01K 9/00, A01K 5/02

(54) **VERFAHREN ZUM AUTOMATISCHEN KALIBRIEREN EINER VORRICHTUNG ZUM VERSORGEN VON HAUSTIEREN**
METHOD FOR AUTOMATICALLY CALIBRATING A DEVICE FOR PROVIDING DOMESTIC ANIMALS WITH A FEED
PROCEDE D'ETALONNAGE AUTOMATIQUE D'UN APPAREIL POUR ALIMENTER DES ANIMAUX DOMESTIQUES

(30) Priorität: 01.04.1998 DE 19814531
(43) Veröffentlichungstag der Anmeldung: 17.01.2001
(73) Patentinhaber: Förster, Martin, 78234 Engen (DE)
(72) Erfinder: Förster, Martin, 78234 Engen (DE)
(74) Vertreter: Weiss, Peter, Dr. rer. nat.
(86) Internationale Anmeldenummer: EP9902142
(87) Internationale Veröffentlichungsnummer: WO99049726

(56) Entgegenhaltungen:
- EP-A- 0 285 596
- GB-A- 2 161 282
- US-A- 4 502 416
- US-A- 4 667 503
- US-A- 5 105 767

## Beschreibung

Die Erfindung betrifft ein Verfahren zum automatischen Kalibrieren einer Steuerung einer Vorrichtung zum Versorgen von Haustieren mit einem Nahrungsmittel, das oder dessen Bestandteile aus Vorratsbehältern in einen Mischbehälter gelangen, der mit einer Entnahmestelle in Verbindung steht.

Die heutige Versorgung von Haustieren mit Nahrungsmitteln geschieht in verstärktem Umfang im automatischen Betrieb. Insbesondere gilt dies für die Aufzucht von Jungtieren (Kälber, Ferkel, Lämmer u.a.), bei der sogenannte Tränkeautomaten verwendet werden. In diesen Tränkeautomaten werden Nahrungsmittelbestandteile in einem Mischbehälter angemischt und einer Saugstelle zugeführt. Die Nahrungsmittelbestandteile können aus Vorratsbehältern oder aus entsprechenden Zuleitungen in den Mischbehälter gelangen. Vom vorliegenden Begriff des Vorratsbehälters sollen alle Möglichkeiten der Zuführung zum Mischbehälter umfasst sein.

Gerade bei der Aufzucht muss aber die Zugabe von Nahrungsmitteln sehr exakt erfolgen, um ein günstiges Mastergebnis zu erzielen. Das heisst, es muss exakt bestimmt werden, in welchem Mischungsverhältnis die einzelnen Nahrungsmittelbestandteile in dem Mischbehälter miteinander vermischt und der Saugstelle zugeführt werden.

Bis heute wird lediglich manuell die Gesamtmenge und manche Einzelmengen einer Portion bestimmt. Die geschieht in zeitlich grossen Abständen und sehr ungenau. Unregelmässigkeiten, die dazwischen auftreten, können nicht erfasst und korrigiert werden. Beispielsweise kann bei der Zugabe von Milchpulver ein Auslaufen am Milchpulvervorratsbehälter in kurzen Zeitabständen verkleben, da die Luftfeuchtigkeit im Bereich des Tränkeautomaten hoch sein kann. Das Milchpulver ist hygroskopisch und verengt durch das Verkleben die Auslauföffnung des Vorratsbehälters, so dass in einer bestimmten Zeit, in der die Auslauföffnung des Vorratsbehälters geöffnet ist, bei verengtem Auslauf einer geringere Menge an Milchpulver zu dem Mischbehälter gelangt. Damit stimmt das Mischungsverhältnis nicht mehr. Wird dies erkannt, so muss der entsprechende Auslauf gereinigt werden.

Die US 4,667,503 beschreibt ein Kalibrierverfahren zur Volumenmessung sowie eine Vorrichtung zum Durchführen des Verfahrens, bei welcher über mehrere eigenständige Behälter unterschiedliche Mittel einer gemeinsamen Waage zugeführt, dort gewogen und nach dem Wiegen einem Mischbehälter zugeführt werden.

Der vorliegenden Erfindung liegt die Aufgabe zugrunde, die Zugabe eines Nahrungsmittels und insbesondere das Mischungsverhältnis der einzelnen Nahrungsmittelbestandteile automatisch zu überwachen und die Zufuhr von Nahrungsmittelbestandteilen veränderten Werten anzupassen.

Zur Lösung dieser Aufgabe führen die Merkmale des Patentanspruches 1.

Diese Messung kann für jeden Nahrungsmittelbestandteil einzeln und separat, aber auch für mehrere Nahrungsmittelbestandteile oder für alle Nahrungsmittelbestandteile separat erfolgen. Beispielsweise ist die Bestimmung der Wassermenge aber die Zeitdauer nicht so wichtig, da sich dieser Faktor selten ändert. In der Wasserzufuhr gibt es nur geringfügige Schwankungen.

Anders ist dies bei der Zugabe von Milchpulver. Ähnliches gilt auch für die Zugabe von Medizinbestandteilen zum Nahrungsmittel, für die eine exakte Bestimmung unabdingbar ist.

Der Grundgedanke, der vorliegenden Erfindung besteht darin, dass in bestimmten Abständen, sei es ausgelöst durch das Bedienpersonal selbst oder durch einen entsprechenden Impuls in der Steuerung, ein Unterbrechen der automatisch gemeinsamen Zugaben aller Nahrungsmittelbestandteile zum Mischbehälter erfolgt. Anstatt dessen werden die Nahrungsmittelbestandteile getrennt in zeitlicher Aufeinanderfolge dem Mischbehälter zugeführt. Gleichzeitig wird bestimmt, welche Zeitdauer eine bestimmte Menge Gewicht und/oder Volumen an Nahrungsmittelbestandteilen benötigt. Weicht diese Zeitdauer von einer bisher in der Steuerung vorgegebenen Zeitdauer ab, so wird der alte Wert durch den neuen Kalibrierwert ersetzt.

Schwierigkeiten können sich bei Nahrungsmittelbestandteilen ergeben, die nur in sehr geringen Mengen, wie beispielsweise Medizinbestandteile, zugegeben werden. Diese Medizinbestandteile können in-10tel-Gramm zugegeben werden, wobei beispielsweise eine Waage das Gewicht nur in Gramm misst. In diesem Fall ist vorgesehen, dass zur Kalibrierung der Auslass des Vorratsbehälters, beispielsweise zehn Mal während einer bestimmten Zeitdauer geöffnet wird und dann die ermittelte Menge durch zehn geteilt wird. Da das Tier eine derartige Mischung nicht trinken sollte, wird diese Mischung nach dem Kalibriervorgang aus dem Mischbehälter abgesaugt bzw. abgelassen und weggeführt.

Nachdem so die gewünschten neuen Kalibrierwerte in der Steuerung festgelegt sind, wird wieder zum automatischen Betrieb übergegangen. Jedoch kann jetzt davon ausgegangen werden, dass innerhalb der Zeitdauer entsprechend dem jetzt gesetzten Kalibrierwert exakt die gewünschte Menge an Nahrungsmittelbestandteilen zugeführt wird, die das jeweils saufende Tier benötigt.

Während dem Kalibriervorgang und während der sonstigen Mengenerfassung wird selbstverständlich die Nahrungszugabe an das Tier gestoppt. Ferner wird nach jeder Ausgabe die Anlage wieder auf Null gesetzt.

Es ist auch daran gedacht, die Kalibrierung zwei oder mehrere Male hintereinander durchzuführen, um zu ermitteln, ob sich Abweichungen ergeben. Ergeben sich Abweichungen über einen vorgegebenen Sollwert hinaus, so kann beispielsweise ein Mittelwert als Kalibrierwert genommen werden, oder aber es wird ein Alarm ausgelöst, der anzeigt, dass mit der Anlage etwas nicht stimmt.

Die bereits auf dem Markt befindlichen Tränkeautomaten od.dgl. müssen nur geringfügig umgestaltet werden. Dem Mischbehälter sollte eine Waage zugeordnet werden, über die das Gewicht der einzelnen Nahrungsmittelbestandtteile ermittelt werden kann. Soll die Ermittlung des Nahrungsmittelbestandteiles anhand anderer Parameter, wie beispielsweise anhand des Füllstandspegels des Mischbehälters ermittelt werden können, so werden selbstverstandlich diese Werte als Grundlage für die Kalibrierung benutzt. Die Ermittlung erfolgt in diesem Fall über einen Füllstandsensor oder Lichtsensor. Auch an eine Ermittlung durch Ultraschall ist gedacht.

Die Ermittlung der Menge der Nahrungsmittelbestandteile hat noch weitere Vorteile. Es kommt vor, dass ein Tier nicht die gesamte, ihm zugedachte angemischte Menge säuft, sondern nur einen Teil davon. Durch die Bestimmung der Nahrungsmittelmenge, sei es anhand des Gewichtes oder anhand des Füllstandes, kann nun bestimmt werden, wieviel das Tier tatsächlich gesoffen hat. Ferner wird in der Regel der Rest von einem nachfolgenden Tier aus dem Mischbehälter entnommen, so dass auch für dieses Tier die zusätzlich von ihm gesoffene Menge bestimmt werden kann.

Durch die Bestimmung der Zeitdauer, während der die Auslässe der einzelnen Vorratsbehälter geöffnet sind, kann auch eine exakte Dosierkontrolle während dem gemeinsamen Anmischen der Nahrungsmittelbestandteile durchgeführt werden. Da bestimmt worden ist, welche Menge an Nahrungsmittel-bestandteil während welcher Zeitdauer aus dem Vorratsbehälter gelangt, kann auf die Menge zurückgeschlossen werden. Nach dem Schliessen aller Austragsöffnungen der Vorratsbehälter bzw. Zuleitungen müsste sich im Mischbehälter eine bestimmte Menge an Nahrungsmittel befinden, d.h., diese Menge müsste ein bestimmtes Gewicht oder eine bestimmte Füllstandshöhe aufweisen. Ist dies nicht der Fall, sollte der oben angegebene Kalibriervorgang eingeleitet werden, um zu bestimmen, bei welchem Vorratsbehälter die Fehlfunktion vorliegt.

Auch bei dieser Kontrollwiegung wird der Zugriff zum Mischbehälter für das Tier gesperrt.

Das Verfahren ist auch anwendbar bei der Zugabe von nur einem Nahrungsmittel, bspw. von Kraftfutter über einen Kraftfutterdosierer oder eine Schnecke. Es soll nicht auf die Anwendung für Jungtiere beschränkt sein. Möglich ist die Kalibrierung jeden Futters für Tiere beliebigen Alters.

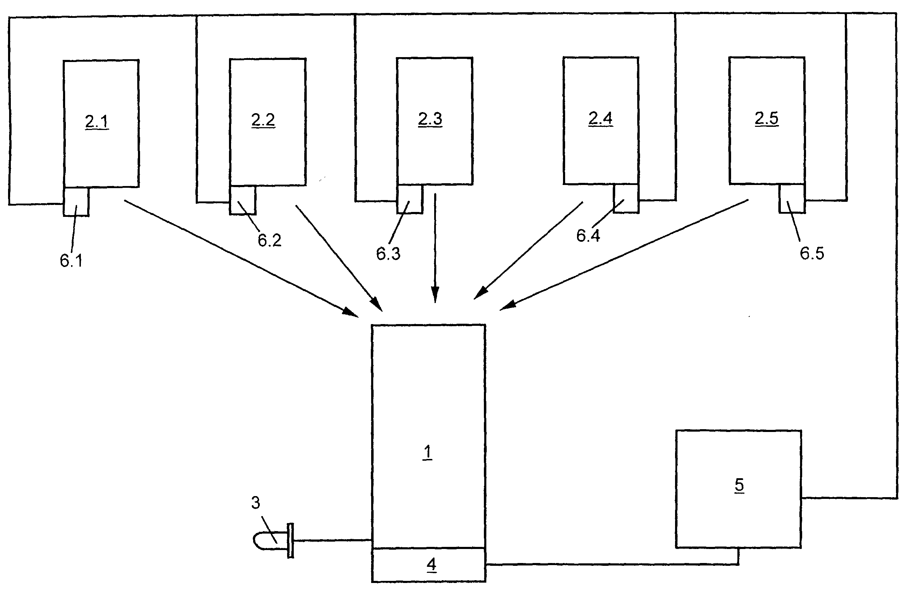

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine schematische Darstellung einer Vorrichtung zum Versorgen von Haustieren, beispielsweise einen Tränkeautomat. Von diesem Tränkeautomat ist ein Mischbehälter 1 angedeutet, dem wiederum fünf Vorratsbehälter 2.1 bis 2.5 zugeordnet sind. In diesen Vorratsbehältern 2.1 bis 2.5 befinden sich jeweils Nahrungsmittelbestandteile, beispielsweise Milchpulver, Medizin, reine Milch oder auch Wasser, wobei als Vorratsbehälter alle möglichen Quellen für die Nahrungsmittelbestandteile fungieren können. Unter Vorratsbehälter wird beispielsweise auch eine normale Zuleitung für Wasser von einem Wasseranschluss verstanden.

Wie diese Nahrungsmittelbestandteile in den Mischbehälter 1 gelangen, ist von untergeordneter Bedeutung. Lediglich durch Pfeile ist angedeutet, dass die Nahrungsmittelbestandteile über Leitungen, im direkten Fall, über Rutschen od. dgl. in den Mischbehälter 1 gelangen können.

Im Mischbehälter 1 wird dann das Nahrungsmittel aus den unterschiedlichen Nahrungsmittelbestandteilen zusammengemischt und einer Entnahmestelle 3 zugeleitet. Dabei kann es sich um eine Saugstelle aber auch beispielsweise um einen Trog od. dgl. handeln.

Dem Mischbehälter 1 ist eine Waage 4 zugeordnet, die mit einer Steuerung 5 in Verbindung steht. Mit der Steuerung 5 stehen ebenfalls Zeitmesseinrichtungen 6.1 bis 6.5 in Verbindung, die ermitteln, welche Zeitdauer eine bestimmte Menge an einem Nahrungsmittelbestandteil benötigt, um von dem Vorratsbehälter 2.1 bis 2.5 in den Mischbehälter 1 zu gelangen.

Die Funktionsweise der vorliegenden Erfindung ist folgende:

Die heutigen Kälbertränken arbeiten in der Regel vollautomatisch. Tritt beispielsweise ein Kalb zu der Saugstelle 3, so wird über einen Transponder der Steuerung der Kälbertränke angezeigt, dass ein bestimmtes Kalb saufen will. Für dieses Kalb wird nun eine bestimmte Menge an Nahrungsmittel in dem Mischbehälter 1 zusammengemischt, wobei die entsprechenden Nahrungsmittelbestandteile gleichzeitig aus den Vorratsbehältern 2.1 bis 2.5 in den Mischbehälter 1 gelangen. Selbstverständlich sind auch die Nahrungsmittelbestandteile für ein bestimmtes Kalb vorherbestimmt, so dass beispielsweise die Zugabe von reiner Milch oder von Medizin je Kalb variieren kann.

Im Laufe der Zeit kann es zu Unregelmässigkeiten beim Eintrag der einzelnen Nahrungsmittelbestandteile in den Mischbehälter 1 kommen. Beispielsweise kann ein Auslauf am Vorratsbehälter für Milchpulver verkleben, so dass eine vorbestimmte Menge an Milchpulver längere Zeit benötigt, um in den Mischbehälter 1 zu gelangen.

Um diesem Nachteil zu begegnen, sollen die Zugaben der Nahrungsmittelbestandteile von Zeit zu Zeit kalibriert werden. Dies kann beispielsweise ein Mal am Tag, in der Woche oder nach einer vorbestimmten Menge an ausgegebenen Portionen geschehen.

Entsprechend dem erfindungsgemässen Verfahren wird zum Kalibrieren die Waage 4 auf Null gestellt. Nunmehr wird getrennt von den anderen Nahrungsmittelbestandteilen dem Mischbehälter 1 eine vorbestimmte Menge an Wasser zugefügt und die Zeitdauer ermittelt, die diese Wassermenge braucht. Dies ist der erste Kalibrierwert.

Nunmehr wird die Waage 4 wieder auf Null gesetzt. Danach erfolgt die Zufuhr von einer bestimmten Menge an beispielsweise Milchpulver. Auch die Zeitdauer dieser Zufuhr wird ermittelt und so ein zweiter Kalibrierwert erhalten.

Dieser Vorgang wird für jeden Nahrungsmittelbestandteil durchgeführt, so dass in der Steuerung 5 exakt die Zeiten gespeichert werden können, welche für die Ausgabe und Überführung einer bestimmten Menge an jeweils dem bestimmten Nahrungsmittelbestandteil benötigt wird.

Nunmehr wird die erfindungsgemässe Vorrichtung wieder auf automatischen Betrieb umgestellt, wobei jedoch die Kalibrierwerte jetzt die exakte Zugabe der gewünschten Menge an Nahrungsmittelbestandteilen in den Mischbehälter 1 erlauben.

## Patentansprüche

1. Verfahren zum automatischen Kalibrieren einer Steuerung einer Vorrichtung zum Versorgen von Haustieren mit einem Nahrungsmittel, das oder dessen Bestandteile aus Vorratsbehältern (2.1 - 2.5) in einen Behälter (1) gelangen, der mit einer Entnahmestelle (3) in Verbindung steht,
**dadurch gekennzeichnet,**
**dass** in einer Steuerung die Zeitdauer für die Zugabe des Nahrungsmittels oder zumindest eines Bestandteiles vorgegeben und in wählbaren Zeitabständen automatisch die Zeitdauer ermittelt wird, die eine bestimmte Menge an Volumen und/oder Gewicht des Nahrungsmittels oder eines bestimmten Nahrungsmittelbestandteiles benötigt, um in den Behälter (1) zu gelangen und bei einer Veränderung des Wertes der erwünschten vorgegebenen Menge die in der Steuerung vorgegebene Zeitdauer verändert wird.

2. Verfahren nach Anspruch 1, **dadurch gekennzeichnet, dass** in wählbaren Zeitabständen automatisch die Zeitdauer ermittelt wird, die eine vorgegebene bestimmte Menge von mehreren oder allen Nahrungsmittelbestandteilen jeweils miteinander benötigt, um in den Behälter (1) zu gelangen und dass aus der ermittelten Zeitdauer, welche die einzelnen Nahrungsmittelbestandteile zum Austrag benötigen, auch im Normalbetrieb auf die Gesamtmenge des Nahrungsmittels geschlossen, diese ermittelt und bei Abweichungen vom Soll-Wert ein Kalibriervorgang eingeleitet wird.

3. Verfahren nach Anspruch 1 oder 2, **dadurch gekennzeichnet, dass** am Behälter (1) das Gewicht und/oder Volumen des/der zu kalibrierenden Nahrungsmittelbestandteile ermittelt wird.

4. Verfahren nach einem der Ansprüche 1 bis 3, **dadurch gekennzeichnet, dass** mindestens zwei Mal hintereinander und bei Abweichung ein drittes Mal und ein Mittelwert als Kalibrierwert genommen und/oder ein Alarm ausgelöst wird.

5. Verfahren nach einem der Ansprüche 1 bis 4, **dadurch gekennzeichnet, dass** bei Nahrungsmittelbestandteilen geringer Menge ein Mehrfaches davon in den Behälter ausgegeben und die ermittelte Menge durch das Mehrfache geteilt wird.

6. Verfahren nach wenigstens einem der Ansprüche 1 bis 5, **dadurch gekennzeichnet, dass** aus der ermittelten zeitdauer, welche die einzelnen Nahrungsmittelbestandteile zum Austrag benötigen, auch im Normalbetrieb auf die Gesamtmenge des Nahrungsmittels geschlossen, diese ermittelt und bei Abweichung vom Soll-Wert ein Kalibiervorgang eingeleitet wird.

## Claims

1. Method for the automatic calibration of a control means for controlling an apparatus for supplying domestic animals with a feed, which feed or the ingredients of which passes or pass into a container (1) from storage containers (2.1 - 2.5), said container (1) communicating with an extraction point (3), **characterised in that** the period for adding the feed or at least one ingredient is prescribed in a control means, and the period which a specific quantity in volume and/or weight of the feed or of a specific feed ingredient requires in order to pass into the container (1) is determined automatically at selectable intervals of time, and the period prescribed in the control means is changed if there is a change in the value of the desired prescribed quantity.

2. Method according to claim 1, **characterised in that** the period which a prescribed specific quantity of several or all of the feed ingredients requires with one another in order to pass into the container (1) is automatically determined at selectable intervals of time, and **in that** the total quantity of the feed is determined from the determined period which the individual feed ingredients require for distribution, said total also being concluded in normal operation, and a calibrating operation is introduced if there are deviations from the desired value.

3. Method according to claim 1 or 2, **characterised in that** the weight and/or the volume of the feed or feed ingredients to be calibrated are/is determined at the container (1).

4. Method according to one of claims 1 to 3, **characterised in that** at least twice in succession and, if there is a deviation, a third time, and a mean value is taken as the calibrating value and/or an alarm is triggered.

5. Method according to one of claims 1 to 4, **characterised in that**, if a small quantity of feed ingredients is involved, a multiple thereof is discharged into the container, and the determined quantity is divided by the multiple.

6. Method according to at least one of claims 1 to 5, **characterised in that** the total quantity of the feed is determined from the determined period which the individual feed ingredients require for distribution, said total also being concluded in normal operation, and a calibrating operation is introduced if there is a deviation from the desired value.

## Revendications

1. Procédé de calibrage automatique de la commande d'un appareil pour alimenter des animaux domestiques en un produit alimentaire, ce produit ou ces composants passant de réservoirs (2.1 à 2.5) dans un récipient (1) relié à un point de prélèvement (3),
**caractérisé en ce que**
dans une commande, la durée de délivrance du produit alimentaire ou d'au moins un composant est prédéfinie et, à des intervalles de temps qui peuvent être choisis, automatiquement est établie la durée nécessaire à une quantité définie, en volume ou en poids, du produit alimentaire ou d'un composant défini de ce produit, pour parvenir au récipient (1), la durée prédéfinie dans la commande variant si on modifie la valeur de la quantité prédéfinie désirée.

2. Procédé selon la revendication 1,
**caractérisé en ce qu'**
à des intervalles de temps qui peuvent être choisis, on détermine automatiquement la durée nécessaire à une certaine quantité prédéterminée de plusieurs ou de tous les composants du produit alimentaire pour parvenir ensemble au récipient (I), et à partir des durées déterminées que demandent les composants individuels pour être délivrés, on détermine également en fonctionnement normal cette durée pour finir la quantité totale de produit alimentaire et, en cas d'écart par rapport à la valeur de consigne, une opération de calibrage est engagée.

3. Procédé selon la revendication 1 ou 2,
**caractérisé en ce que**
dans le récipient (1) est établi le poids et/ou le volume du ou des composants du produit alimentaire à calibrer.

4. Procédé selon l'une quelconque des revendications 1 à 3,
**caractérisé en ce qu'**
on opère par deux fois, successivement et en cas d'écart, une troisième fois et on prend une valeur moyenne pour valeur de calibrage et/ou une alarme est déclenchée.

5. Procédé selon l'une quelconque des revendications 1 à 4,
**caractérisé en ce que**
dans le cas d'une faible quantité de composant du produit alimentaire, on délivre un multiple de ce composant dans le récipient, et la quantité établie est divisée par le facteur de multiplication.

6. Procédé selon au moins l'une quelconque des revendications 1 à 5,
**caractérisé en ce qu'**
à partir des durées déterminées que mettent les différents composants du produit alimentaire pour être délivrés, également en fonctionnement normal globalement pour la quantité totale du produit alimentaire, cette quantité est établie et en cas d'écart par rapport à la valeur de consigne, une opération de calibrage est engagée.
